# EUROPÄISCHE PATENTSCHRIFT

(11) **EP 2 373 174 B1**
(45) Veröffentlichungstag und Bekanntmachung des Hinweises auf die Patenterteilung: **17.12.2014**
(21) Anmeldenummer: 10726446.7
(22) Anmeldetag: 24.06.2010
(51) Int. Cl.: A22C 25/12

(54) **FISCH-TRANSPORTVORRICHTUNG ZUM AUTOMATISCHEN ZUFÜHREN VON FISCHEN AN EINE FISCHBEARBEITUNGSMASCHINE SOWIE EINRICHTUNG ZUM GLEICHRICHTEN VON FISCHEN IN KOPF-/SCHWANZAUSRICHTUNG MIT EINER SOLCHEN FISCH-TRANSPORTVORRICHTUNG**
FISH TRANSPORTING DEVICE FOR AUTOMATICALLY FEEDING FISH TO A FISH PROCESSING MACHINE AND DEVICE FOR ALIGNING FISH IN A HEAD/TAIL ORIENTATION HAVING SUCH A FISH TRANSPORTING DEVICE
DISPOSITIF DE TRANSPORT DE POISSONS PERMETTANT L'ACHEMINEMENT AUTOMATIQUE DE POISSONS VERS UNE MACHINE DE TRAITEMENT DU POISSON ET DISPOSITIF SERVANT À REDRESSER LES POISSONS AFIN D'ORIENTER LEUR TÊTE VERS L'AVANT ET POURVU D'UN TEL DISPOSITIF DE TRANSPORT DE POISSONS

(30) Priorität: 30.06.2009 DE 102009031580
(43) Veröffentlichungstag der Anmeldung: 12.10.2011
(73) Patentinhaber: Nordischer Maschinenbau Rud. Baader GmbH + Co. KG, 23560 Lübeck (DE)
(72) Erfinder: DANN, Andreas, 23569 Lübeck (DE); HOLTZ, Jörg, 23564 Lübeck (DE)
(74) Vertreter: Stork Bamberger
(86) Internationale Anmeldenummer: PCT/EP2010/003791
(87) Internationale Veröffentlichungsnummer: WO 2011/000496

(56) Entgegenhaltungen:
- BE-A- 656 421
- US-A- 4 399 588

## Beschreibung

Die Erfindung betrifft eine Fisch-Transportvorrichtung zum automatischen Zuführen von Fischen an eine Fischbearbeitungsmaschine, umfassend eine Transporteinrichtung mit einem Bodenelement zum Aufnehmen der Fische und seitlichen Begrenzungselementen zum Führen der Fische sowie ein Rüttelorgan zum schwingenden Antreiben der Transporteinrichtung. Des Weiteren betrifft die Erfindung eine Einrichtung zum Gleichrichten von Fischen in Kopf-/Schwanzausrichtung, umfassend eine Fisch- Transportvorrichtung (10) sowie eine an einem Ende der Fisch-Transportvorrichtung (10) angeordnete Einrichtung zum Wenden der Fische bezüglich ihrer Lage Kopf-/Schwanzausrichtung.

Solche auch als Schwing- oder Rüttelrinnen bekannten Fisch-Transportvorrichtungen kommen in der Fisch verarbeitenden Industrie zum Einsatz, um Fische in eine gewünschte Richtung zum Beispiel in Richtung einer Fischbearbeitungsmaschine zu transportieren. Fische weisen aufgrund ihrer Struktur und Oberflächenbeschaffenheit eine bevorzugte Transportbewegung auf, die von unterschiedlichen Faktoren und/oder Parametern abhängt. Bei den Fischen sind die Schuppenstruktur, das Vorhandensein von Flossen (Schwanz-, Seiten- und Brustflossen), die Kiemendeckeln und/oder andere Eigenschaften, wie z.B. das Gewicht und die geometrische Beschaffenheit solche Faktoren bzw. Parameter. Diese Faktoren bzw. Parameter werden genutzt, um die Fische in eine gewünschte Richtung zu transportieren, indem z.B. die Schwerkraft oder die raue Schuppenstruktur der Fische als Antrieb(s-Impuls) dienen. Am Beispiel der Schuppenstruktur erfolgt der Transport, indem sich die Schuppen quasi mit einer rauen Oberfläche der Transporteinrichtung "verhaken". Durch die Schwing- bzw. Rüttelbewegung der Transporteinrichtung werden die Fische mit ihrer Schuppenstruktur an der rauen Oberfläche abgestoßen, was zu der Transportbewegung in Richtung Kopf voraus führt. Die bevorzugte Transportbewegung der Fische ist nicht nur in Bezug auf die Schuppenstruktur daher Kopf voraus.

Entsprechende Einrichtungen zum Gleichrichten der Fische in Kopf-/Schwanzausrichtung weisen eine solche Fisch-Transporteinrichtung auf. Die Fische, die bereits mit Kopf voraus in der bevorzugten Transportbewegung (Transportrichtung) auf die Fischbearbeitungsmaschine ausgerichtet sind, werden durch das Schwingen/Rütteln Kopf voraus in Richtung der dort vorgesehenen Fischbearbeitungsmaschine transportiert. Die Fische mit einer Ausrichtung Schwanz voraus in Richtung Fischbearbeitungsmaschine werden durch das Schwingen/Rütteln in die entgegen gesetzte Richtung von der Fischbearbeitungsmaschine weg in Richtung einer Wendeeinrichtung transportiert, in der Wendeeinrichtung um 180° gedreht, derart, dass die Fische nach dem Wenden mit dem Kopf in Richtung der Fischbearbeitungsmaschine auf der Fisch-Transportvorrichtung liegen und dann der Fischbearbeitungsmaschine zugeführt werden.

Aus DE 195 11 489 A1 ist eine Fisch-Transporteinrichtung zum automatischen Zuführen von Fischen an eine Fischbearbeitungsmaschine gemäß dem Oberbegriff des Anspruchs 1 bekannt.

Das Dokument BE 656 421 offenbart eine Fisch-Transportvorrichtung zum automatischen Zuführen von Fischen an eine Fischbearbeitungsmaschine, umfassend eine Transporteinrichtung mit einem Bodenelement zum Aufnehmen der Fische und seitlichen Begrenzungselementen zum Führen der Fische sowie ein Rüttelorgan zum schwingenden Antreiben der Transporteinrichtung, wobei das Bodenelement als Platte mit Querschlitzen ausgebildet ist.

Aus der Praxis ist es ebenfalls bekannt, einfache Schwing- oder Rüttelrinnen oder dergleichen mit einer den Transport der Fische in die bevorzugte Richtung unterstützenden Oberflächenstruktur zu versehen. Dabei kann die geschlossene Oberfläche des Bodenelementes z.B. mit quer zur Transportrichtung geschliffenen Riefen, Rillen oder dergleichen versehen sein, die den Transport der Fische unterstützen. In weiteren in der Praxis eingesetzten Fisch-Transportvorrichtungen wird z.B. herkömmliches Schleifpapier auf die Oberfläche des Bodenelementes aufgebracht, um die Möglichkeit des "Einhakens" der Fische in das Bodenelement zu unterstützen. Der Transport der Fische wird aber dadurch erschwert, dass die Fische üblicherweise feucht sind und außen eine schleimige Schicht bzw. Ummantelung aufweisen. Dadurch werden die Reibung und/oder das "Einhaken" der Fische in die Oberflächenstruktur des Bodenelementes erschwert. Dies betrifft insbesondere Fische der Spezies Forelle, aber auch Lachs und anderen Spezies. Die bekannten Fisch-Transportvorrichtungen weisen jedoch mehrere Nachteile auf. Zum einen ist die Transportgeschwindigkeit aufgrund der Fischbeschaffenheit einerseits und der Oberflächenstruktur des Bodenelementes andererseits begrenzt. Des Weiteren ist die Oberflächenstruktur des Bodenelementes lediglich dazu geeignet, Fische kleinerer Größe zu transportieren. Zum anderen sind solche Fisch-Transportvorrichtungen nur schwer zu reinigen. Anders ausgedrückt erfüllen die bekannten Fisch-Transportvorrichtungen nicht die in der Lebensmittelindustrie erforderlichen Hygieneanforderungen, da das Wasser und/oder der Schleim auf dem Bodenelement steht und nur durch zusätzliche Spülung entfernt werden kann. Im Übrigen werden durch die Riefen, Rillen oder das Schleifpapier so genannte "Schmutzecken" gebildet, in denen Reste der Fische hängen bleiben, was zu einer Kontamination nachfolgender Fische führen kann.

Der Erfindung liegt damit die Aufgabe zugrunde, eine einfache und zuverlässige Vorrichtung zum Transportieren von Fischen jeder Größe zu schaffen, die die erforderlichen hygienischen Anforderungen erfüllt. Des Weiteren ist es Aufgabe der vorliegenden Erfindung, eine Einrichtung zum Gleichrichten von Fischen in Kopf-/Schwanzausrichtung mit einer entsprechenden Fisch-Transportvorrichtung vorzuschlagen.

Diese Aufgabe wird durch eine Fisch-Transportvorrichtung der eingangs genannten Art dadurch gelöst, dass das Bodenelement als Gitterblech mit rechteckförmigen Durchbrüchen ausgebildet ist. Damit wird auf überraschend einfache und zuverlässige Weise eine Fisch-Transportvorrichtung zur Verfügung gestellt, die einerseits das zuverlässige Transportieren aller Fische bzw. Fischgattungen gewährleistet und andererseits besonders wartungs- und reinigungsfreundlich ausgebildet ist. Durch die erfindungsgemäße Gestaltung des Bodenelementes wird das Transportieren vereinfacht und gleichzeitig das Wasser bzw. der von den Fischen abgesonderte Schleim vom Bodenelement abgeführt. Die rechteckförmigen Durchbrüche ermöglichen das Einhaken insbesondere von Flossen, so dass starke Antriebsimpulse auf die Fische ausgeübt werden können. Damit ist auch der Transport großer Fische bzw. von Fischen mit hohem Gewicht ermöglicht. Durch das durchlässige Profil des Gitterblechs kann der Schleim abfließen, so dass die Transportfläche frei von Schleim ist. Damit können die Produktionsbedingungen für einen längeren Produktionszeitraum konstant gehalten werden. Des Weiteren kann das Spülen der Transportfläche entfallen, wodurch der Wasserverbrauch reduziert wird.

Die Erfindung zeichnet sich weiterhin dadurch aus, dass die rechteckförmigen Durchbrüche mit ihren Kanten in Transportrichtung T der Fische und in einem rechten Winkel zur Transportrichtung T angeordnet sind. Dadurch wirken die Kanten, insbesondere die Kanten, die in einem rechten Winkel zur Transportrichtung T angeordnet bzw. ausgerichtet sind, direkt in Transportrichtung T, wodurch die Transportbewegung optimal unterstützt wird.

Vorteilhafterweise sind die Durchbrüchen in einem gleichmäßigen Muster in dem Bodenelement angeordnet. Die Verteilung, nämlich insbesondere die Anzahl und die Abstände der Durchbrüche, sowie die Größe der Durchbrüche zur Bildung des Musters sind derart gewählt, dass in Verbindung mit dem Antrieb, also insbesondere der Frequenz, ein optimaler Transport der Fische gewährleistet wird.

Eine bevorzugte Ausführungsform der Erfindung ist dadurch gekennzeichnet, dass unterhalb des Gitterblechs ein Leitelement zum Aufnehmen und Abführen der durch die Durchbrüche des Gitterblechs fallenden, fluiden und/oder festen Bestandteile angeordnet ist. Der durch das Gitterblech fließende bzw. strömende oder tropfende Schleim und die weitere Bestandteile werden von dem Leitelement aufgefangen und können so gezielt und definiert abgeführt werden.

Die Aufgabe wird auch durch eine eingangs genannte Einrichtung zum Gleichrichten von Fischen in Kopf-/Schwanzausrichtung dadurch gelöst, dass die Fisch-Transportvorrichtung nach einem der Ansprüche 1 bis 15 ausgebildet ist. Die sich daraus ergebenden Vorteile wurden bereits im Zusammenhang mit der Fisch-Transportvorrichtung beschrieben, weswegen zur Vermeidung von Wiederholungen auf die entsprechenden Passagen verwiesen wird.

Weitere zweckmäßige und/oder vorteilhafte Merkmale und Weiterbildungen der Erfindung ergeben sich aus den Unteransprüchen und der Beschreibung. Eine besonders bevorzugte Ausführungsform der Erfindung wird anhand der beigefügten Zeichnung näher erläutert. In der Zeichnung zeigt:
- Fig. 1: eine schematische Darstellung einer Einrichtung zum Gleichrichten von Fischen in Kopf-/Schwanzausrichtung mit einer Fisch-Transportvorrichtung in Seitenansicht,
- Fig. 2a: eine Vorderansicht der Fisch-Transportvorrichtung mit einer U-förmigen Rinne und eingelegtem Gitterblech,
- Fig. 2b: eine Seitenansicht der Fisch-Transportvorrichtung gemäß Figur 2a,
- Fig. 3a: eine Vorderansicht der Fisch-Transportvorrichtung, bei der die U-förmige Rinne aus dem Gitterblech und seitlichen Begrenzungselementen gebildet und unterhalb der Rinne ein Leitelement angeordnet ist,
- Fig. 3b: eine Seitenansicht der Fisch-Transportvorrichtung gemäß Figur 3a,
- Fig. 4: eine Draufsicht auf das Gitterblech,
- Fig. 5: eine vergrößerte Darstellung des Ausschnitts V gemäß Figur 4, und
- Fig. 6: eine Draufsicht auf eine weitere Ausführungsform des Gitterblechs.

Die in der Zeichnung dargestellten Gitterbleche und Fisch-Transportvorrichtungen können als Nachrüstsatz für bereits vorhandene Schwingrinnen oder dergleichen sowie als eigenständige Fisch-Transportvorrichtung zum automatischen Zuführen von Fischen und/oder zum Sortieren derselben in Kopf-/Schwanzausrichtung dienen bzw. eingesetzt werden.

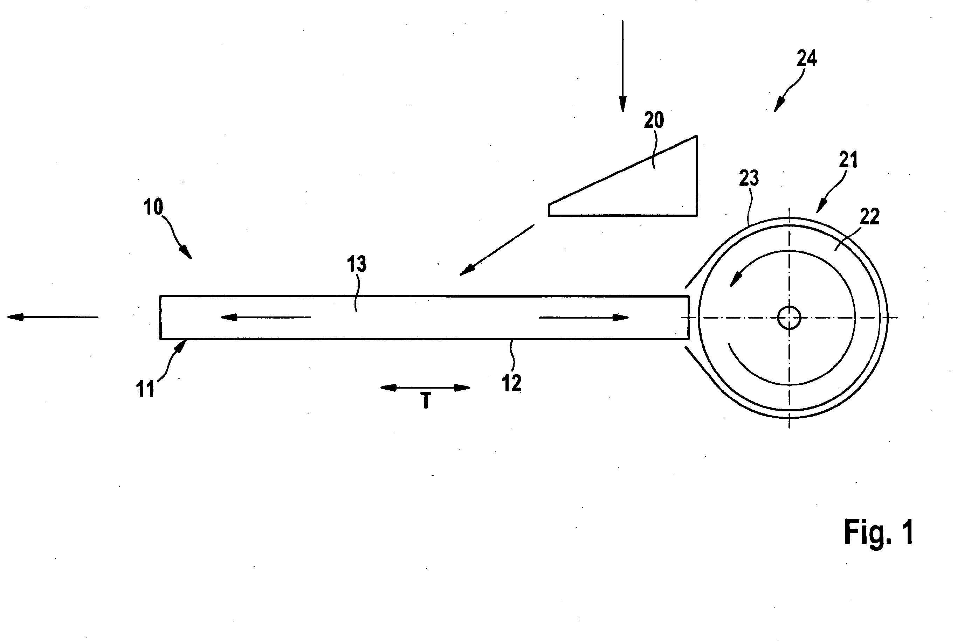

In den Figuren 1 bis 6 sind unterschiedliche Varianten von Fisch-Transportvorrichtungen 10 zum automatischen Zuführen von Fischen an eine nachgeordnete (nicht dargestellte) Fischbearbeitungsmaschine gezeigt. Jede Fisch-Transportvorrichtung 10 umfasst eine Transporteinrichtung 11 mit einem Bodenelement 12 sowie seitlichen Begrenzungselementen 13, die auch als Seitenelemente bezeichnet werden. Das Bodenelement 12 dient zum Aufnehmen und Fördern der Fische. Die seitlichen Begrenzungselemente 13 halten die Fische auf dem Bodenelement 12 bzw. Führen die Fische in Transportrichtung T. Des Weiteren ist der Transporteinrichtung 11 ein Rüttelorgan zugeordnet, das die Transporteinrichtung 11 zum Schwingen bringt. Bei dem Rüttelorgan handelt es sich um einen für solche Zwecke üblichen Antrieb, so dass auf eine Darstellung sowie eine detaillierte Beschreibung verzichtet wird.

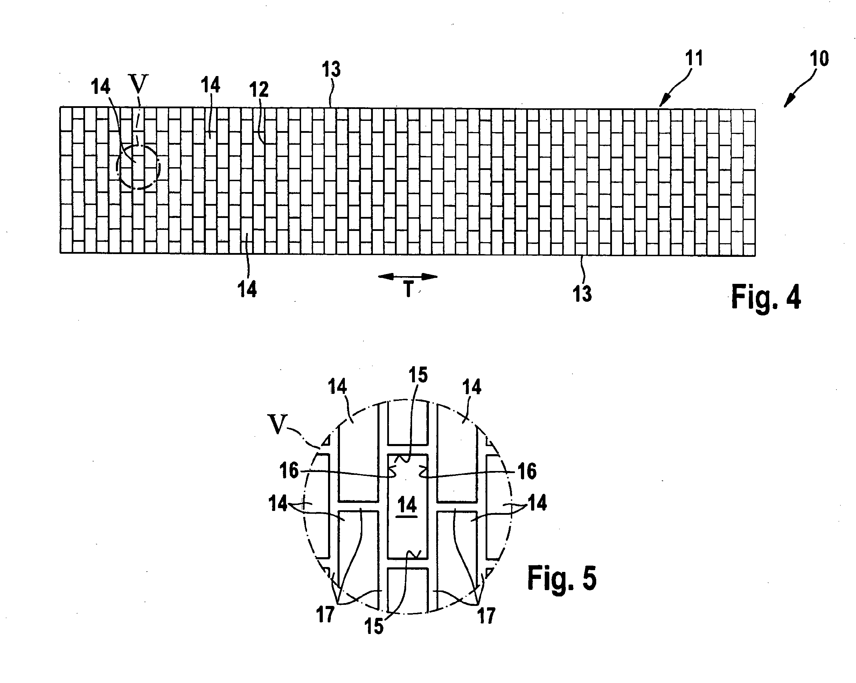

Das Bodenelement 12 ist erfindungsgemäß als Gitterblech ausgebildet. Dazu weist das Bodenelement 12 mehrere rechteckförmige Durchbrüche 14 auf. Grundsätzlich ist die Anzahl der Durchbrüche 14 und deren Verteilung beliebig. Bevorzugt und wie in den Figuren 4, 5 und 6 gezeigt sind die Durchbrüche 14 derart angeordnet, dass zwei gegenüber liegende Kanten 15 in Transportrichtung T der Fische und zwei weitere Kanten 16 in einem rechten Winkel zur Transportrichtung T angeordnet sind. Vorzugsweise sind die in Transportrichtung T der Fische gerichteten Kanten 15 der Durchbrüche 14 kürzer als die Kanten 16 der Durchbrüche 14, die in einem rechten Winkel zur Transportrichtung T gerichtet sind. Die Durchbrüche 14 können aber auch quadratisch ausgebildet sein oder ein anderes Kantenlängenverhältnis aufweisen als beschrieben.

Zwischen benachbarten Durchbrüchen 14 sind jeweils Stege 17 ausgebildet. Die Stege 17 sind schmaler als die Durchbrüche 14 in ihrer Breite quer zur Transportrichtung T. Mit anderen Worten ist die Breite der Stege 17 kleiner als die Breite der Durchbrüche 14. Wie erwähnt können die Durchbrüche 14 beliebig verteilt sein. Vorzugsweise sind die Durchbrüche 14 jedoch in einem gleichmäßigen Muster in dem Bodenelement 12 angeordnet. Dazu liegen mehrere Durchbrüche 14 quer zur Transportrichtung T in einer Reihe nebeneinander. Die Durchbrüche 14 einer Reihe weisen im Wesentlichen die gleiche Form und Größe auf. Lediglich in den Randbereichen können die Durchbrüche 14 in ihrer Form und Größe abweichend ausgebildet sein. Die Durchbrüche 14 sind von Reihe zu Reihe versetzt zueinander angeordnet, nämlich quasi "auf Lücke". Anders ausgedrückt liegen die Durchbrüche 14 einer Reihe jeweils versetzt zu den Durchbrüchen 14 der in Transportrichtung T benachbarten Reihen, um die Chance des Eintritts/Einhakens von Flossen in die Durchbrüche 14 zu erhöhen.

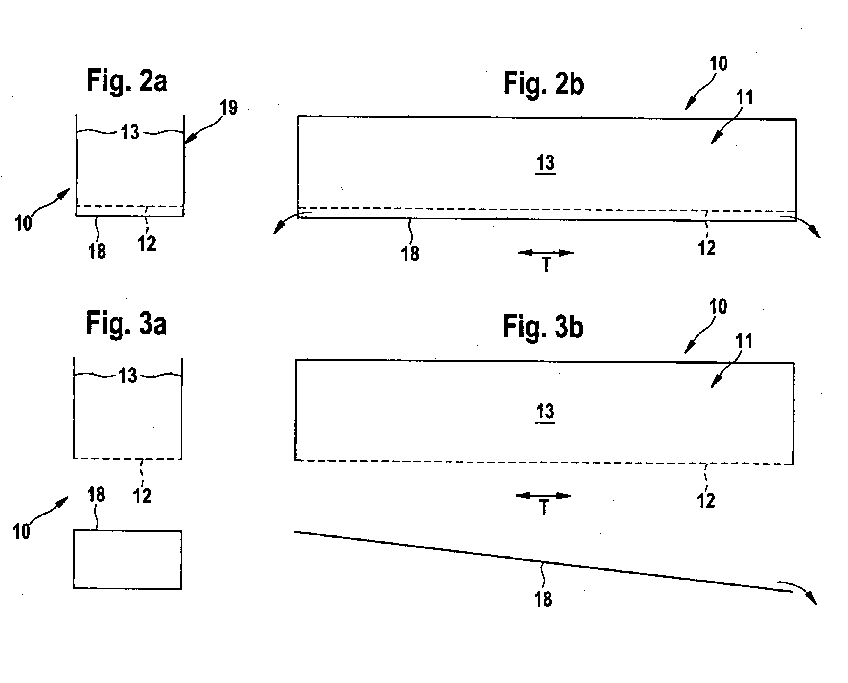

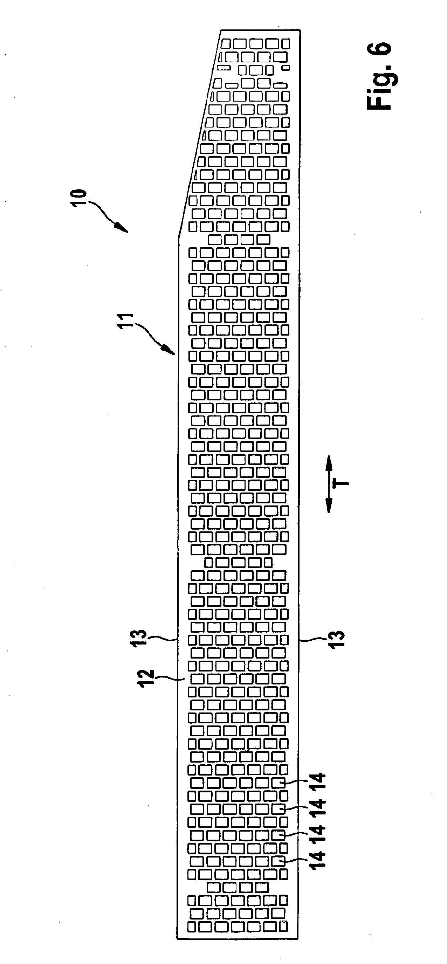

Wie erwähnt kann das Gitterelement als eigenständige Fisch-Transportvorrichtung 10 dienen. Dann sind dem Gritterelement direkt die seitlichen Begrenzungselemente 13 (wie z.B. in Figur 3) sowie das Rüttelorgan zugeordnet. Optional ist dem Bodenelement 12 bzw. Gitterblech ein Leitelement 18 zum Aufnehmen und Abführen der durch die Durchbrüche 14 des Gitterblechs fallenden, strömenden oder in anderer Weise von oben nach unten gelangenden fluiden und/oder festen Bestandteilen zugeordnet. Vorzugsweise ist das Gitterblech jedoch als Nachrüstsatz für bestehende, aus dem Leitelement 18 und den seitlichen Begrenzungselementen 13 gebildete Rinnen 19 ausgebildet. Das Gitterblech ist dann lose in die Rinne 19 eingelegt oder fest aber lösbar mit dem Leitelement 18 bzw. der Rinne 19 verbunden. In diesem Fall ist das Rüttelorgan vorzugsweise der Rinne zugeordnet. Das Bodenelement 12 bzw. das Gitterblech kann, wie in Figur 6 gezeigt, an einem Ende optional abgeschrägt sein. Diese Schräge kann z.B. dazu dienen, die Fische gezielt einer Eintakteinrichtung oder anderen nachfolgenden Komponenten zuzuführen. An diesem abgeschrägten Abschnitt des Bodenelementes 12 können Form und Größe der Durchbrüche 14 entsprechend angepasst sein.

Vorzugsweise ist das Gitterblech horizontal ausgerichtet. Optional kann das Gitterblech aber auch eine geringe Neigung von wenigen Grad gegenüber der horizontalen Ebene aufweisen. Das Leitelement 18 kann parallel und nicht parallel und beabstandet zum Gitterblech angeordnet und ausgerichtet sein. Vorzugsweise ist das Leitelement 18 jedoch in einem Winkel gleich 0° zur Ausrichtung des Gitterblechs angeordnet, wie in Figur 2 dargestellt. Eine weitere Ausführungsform sieht vor, die Neigung des Leitelementes 18 gegenüber dem Gitterblech und/oder der horizontalen Ebene bzw. die Einheit aus Rinne 19 und Gitterblech einstellbar zu gestalten. Der Abstand zwischen dem Gitterblech und dem Leitelement 18 ist ebenfalls variabel und einstellbar. Insbesondere zu Reinigungszwecken kann auch eine schwenkbare oder anderweitig verstellbare Ausbildung der Rinne 19 oder eine schwenkbare Anordnung zwischen Leitelement 18 und Gitterblech vorgesehen sein. Vorzugsweise beträgt der Abstand zwischen dem Gitterblech und dem Leitelement 18 zwischen 5mm und 20mm und bevorzugt zwischen 7mm und 16mm und besonders bevorzugt etwa 10mm.

Das Bodenelement 12 bzw. das Gitterblech ist bevorzugt aus Edelstahl hergestellt. Eine Ausbildung aus Kunststoff oder anderen korrosionsbeständigen Werkstoffen oder Werkstoffkombinationen ist ebenfalls möglich. Entsprechendes gilt auch für das Leitelement 18 und/oder die seitlichen Begrenzungselemente 13. Dem Rüttelorgan bzw. dem zugehörigen Antrieb ist eine Steuerung zugeordnet, mittels der die Transportgeschwindigkeit, nämlich insbesondere die Frequenz einstellbar ist. Eine bevorzugte Frequenz liegt im Bereich von 250 bis 350 Doppelhüben/min. Selbstverständlich kann die Frequenz auch außerhalb dieses Bereiches liegen. Mit der Veränderung bzw. Anpassung der Frequenz kann die Fisch-Transportvorrichtung 10 für den Transport von Fischen mit unterschiedlichen Qualitäten und Größen angepasst werden.

Das automatische Zuführen und/oder Sortieren der Fische erfolgt wie im Folgenden erwähnt:

Die Fische werden direkt oder über ein Zuführelement 20, beispielsweise eine Rutsche oder dergleichen, auf das Bodenblech 12 geleitet, wobei die Ausrichtung der Fische bezüglich Kopf-/Schwanzausrichtung ungeordnet auf dem Bodenelement 12 landen. An einem Ende der Fisch-Transporteinrichtung 10 ist eine (nicht dargestellte) Fischbearbeitungsmaschine angeordnet. Am entgegen gesetzten Ende der Fisch-Transportvorrichtung 10 ist eine Einrichtung (21) zum Wenden der Fische in Kopf-/Schwanzausrichtung angeordnet. Durch den Rüttel- bzw. Schwingantrieb des Bodenelementes 12 werden die Fische in ihrer bevorzugten Transportbewegung Kopf voraus transportiert. Dazu haken sich die Fische mit ihren Flossen in die Durchbrüche 14 ein werden durch die Schwingbewegung abgestoßen. Anders ausgedrückt geben die Kanten 15, 16, insbesondere die quer zur Transportrichtung T verlaufenden Kanten 16, dem Fisch einen Antriebsimpuls, der die Fische nach vorne Kopf voraus bewegt. Die Fische, deren Köpfe in Richtung der Fischbearbeitungsmaschine weisen, werden nach dem Erreichen der Fischbearbeitungsmaschine direkt bearbeitet. Die Fische, die von der Fischbearbeitungsmaschine weg transportiert werden, bewegen sich in Richtung der Einrichtung 21 zum Wenden. Diese Einrichtung 21 wendet die Fische um 180° derart, dass die Fische nach dem Austritt aus der Einrichtung 21 Kopf voraus auf dem Bodenelement 12 in Richtung der Fischbearbeitungsmaschine weisen. In dieser Einrichtung 21 zum Wenden transportiert ein rotierendes Element 22, beispielweise eine Walze, Bürste oder dergleichen die Fische. Außenseitig wird das rotierende Element 22 durch ein Führungsblech 23 oder dergleichen zur Bildung eines Kanals begrenzt wird. Anschließend werden die lagekorrigierten Fische in bereits beschriebener Weise der Fischbearbeitungsmaschine zugeführt. Die Frequenz der Rüttel- bzw. Schwingbewegung wird in Abhängigkeit der Qualität und Größe (Gewicht) der Fische eingestellt. Die Fisch-Transportvorrichtung 10 bildet zusammen mit der Einrichtung 21 zum Wenden eine Einrichtung 24 zum Gleichrichten von Fischen in Kopf-/Schwanzausrichtung.

## Patentansprüche

1. Fisch-Transportvorrichtung (10) zum automatischen Zuführen von Fischen an eine Fischbearbeitungsmaschine, umfassend eine Transporteinrichtung (11) mit einem Bodenelement (12) zum Aufnehmen der Fische und seitlichen Begrenzungselementen (13) zum Führen der Fische sowie ein Rüttelorgan zum schwingenden Antreiben der Transporteinrichtung **(11), dadurch gekennzeichnet, dass** das Bodenelement (12) als Gitterblech mit rechteckförmigen Durchbrüchen (14) ausgebildet ist, wobei die rechteckförmigen Durchbrüche (14) mit ihren Kanten (15, 16) in Transportrichtung T der Fische und in einem rechten Winkel zur Transportrichtung T angeordnet sind.

2. Vorrichtung nach Anspruch 1, **dadurch gekennzeichnet, dass** die in Transportrichtung T der Fische weisenden Kanten (15) der Durchbrüche (14) kürzer sind als die Kanten (16) der Durchbrüche (14), die in rechtem Winkel zur Transportrichtung T gerichtet sind.

3. Vorrichtung nach Anspruch 1 oder 2, **dadurch gekennzeichnet, dass** die Stege (17) zwischen benachbarten Durchbrüchen (14) schmaler sind als die Durchbrüche (14) in ihrer Breite quer zur Transportrichtung T.

4. Vorrichtung nach einem der Ansprüche 1 bis 3, **dadurch gekennzeichnet, dass** die Durchbrüche (14) in einem gleichmäßigen Muster in dem Bodenelement (12) angeordnet sind.

5. Vorrichtung nach einem der Ansprüche 1 bis 4, **dadurch gekennzeichnet, dass** mehrere Durchbrüche (14) quer zur Transportrichtung T in einer Reihe nebeneinander liegen.

6. Vorrichtung nach Anspruch 5, **dadurch gekennzeichnet, dass** die Durchbrüche (14) einer Reihe versetzt zu den Durchbrüchen (14) der in Transportrichtung T benachbarten Reihen liegen.

7. Vorrichtung nach einem der Ansprüche 1 bis 6, **dadurch gekennzeichnet, dass** unterhalb des Gitterblechs ein Leitelement (18) zum Aufnehmen und Abführen der durch die Durchbrüche (14) des Gitterblechs fallenden fluiden und/oder festen Bestandteile angeordnet ist.

8. Vorrichtung nach Anspruch 7, **dadurch gekennzeichnet, dass** das Leitelement (18) mit den seitlichen Begrenzungselementen (13) eine U-förmige Rinne bildet.

9. Vorrichtung nach Anspruch 8, **dadurch gekennzeichnet, dass** das Gitterblech in die U-förmige Rinne eingelegt ist.

10. Vorrichtung nach einem der Ansprüche 7 bis 9, **dadurch gekennzeichnet, dass** das Gitterblech parallel zum Leitelement (18) angeordnet ist.

11. Vorrichtung nach einem der Ansprüche 8 bis 10, **dadurch gekennzeichnet, dass** das Rüttelorgan der U-förmigen Rinne zugeordnet ist.

12. Vorrichtung nach einem der Ansprüche 7 bis 11, **dadurch gekennzeichnet, dass** der Abstand zwischen dem Gitterblech und dem Leitelement (18) und/oder der Winkel zwischen dem Gitterblech und dem Leitelement (18) einstellbar ist.

13. Vorrichtung nach einem der Ansprüche 7 bis 12, **dadurch gekennzeichnet, dass** der Abstand zwischen dem Gitterblech und dem Leitelement (18) zwischen 5mm und 20mm und bevorzugt zwischen 7mm und 16mm und besonders bevorzugt etwa 10mm beträgt.

14. Vorrichtung nach einem der Ansprüche 1 bis 13, **dadurch gekennzeichnet, dass** mindestens das Gitterblech aus Edelstahl hergestellt ist.

15. Einrichtung (24) zum Gleichrichten von Fischen in Kopf-/Schwanzausrichtung, umfassend eine Fisch- Transportvorrichtung (10) sowie eine an einem Ende der Fisch-Transportvorrichtung (10) angeordnete Einrichtung (21) zum Wenden der Fische bezüglich ihrer Lage Kopf-/Schwanzausrichtung, **dadurch gekennzeichnet, dass** die Fisch-Transportvorrichtung (10) nach einem der Ansprüche 1 bis 14 ausgebildet ist.

## Claims

1. Fish transporting apparatus (10) for automatically feeding fish to a fish processing machine, comprising a transport device (11) with a bottom element (12) for receiving the fish and lateral boundary elements (13) for guiding the fish as well as a vibrating member for vibratory driving of the transport device (11), **characterised in that** the bottom element (12) is constructed as a grid plate with rectangular apertures (14), wherein the rectangular apertures (14) are arranged with their edges (15, 16) in the direction of transport T of the fish and at a right angle to the direction of transport T.

2. Apparatus according to claim 1, **characterised in that** the edges (15) of the apertures (14) which point in the direction of transport T of the fish are shorter than the edges (16) of the apertures (14) which are directed at a right angle to the direction of transport T.

3. Apparatus according to claim 1 or 2, **characterised in that** the webs (17) between adjacent apertures (14) are narrower than the apertures (14) in their width transversely to the direction of transport T.

4. Apparatus according to any one of claims 1 to 3, **characterised in that** the apertures (14) are arranged in a uniform pattern in the bottom element (12).

5. Apparatus according to any one of claims 1 to 4, **characterised in that** several apertures (14) lie in a row adjacent to each other transversely to the direction of transport T.

6. Apparatus according to claim 5, **characterised in that** the apertures (14) of one row are staggered from the apertures (14) of the rows which are adjacent in the direction of transport T.

7. Apparatus according to any one of claims 1 to 6, **characterised in that** beneath the grid plate is arranged a guide element (18) for receiving and carrying away the fluid and/or solid constituents which fall through the apertures (14) of the grid plate.

8. Apparatus according to claim 7, **characterised in that** the guide element (18) with the lateral boundary elements (13) forms a U-shaped channel.

9. Apparatus according to claim 8, **characterised in that** the grid plate is inserted in the U-shaped channel.

10. Apparatus according to any one of claims 7 to 9, **characterised in that** the grid plate is arranged parallel to the guide element (18).

11. Apparatus according to any one of claims 8 to 10, **characterised in that** the vibrating member is associated with the U-shaped channel.

12. Apparatus according to any one of claims 7 to 11, **characterised in that** the distance between the grid plate and the guide element (18) and/or the angle between the grid plate and the guide element (18) is adjustable.

13. Apparatus according to any one of claims 7 to 12, **characterised in that** the distance between the grid plate and the guide element (18) is between 5 mm and 20 mm and preferably between 7 mm and 16 mm and particularly preferably approximately 10 mm.

14. Apparatus according to any one of claims 1 to 13, **characterised in that** at least the grid plate is made of special steel.

15. Device (24) for aligning fish in a head/tail orientation, comprising a fish transporting apparatus (10) and a device (21) arranged at one end of the fish transporting apparatus (10) for turning the fish with respect to their position of head/tail orientation, **characterised in that** the fish transporting apparatus (10) is constructed according to any one of claims 1 to 14.

## Revendications

1. Dispositif de transport de poissons (10) pour l'acheminement automatique de poissons jusqu'à une machine de traitement de poissons, comportant un dispositif de transport (11) pourvu d'un élément de fond (12) pour recevoir les poissons et d'éléments de délimitation latéraux (13) pour guider les poissons, ainsi qu'un organe vibrant pour entraîner le dispositif de transport (11) de manière vibrante, **caractérisé en ce que** l'élément de fond (12) est réalisé sous forme de tôle grillagée pourvue d'ouvertures rectangulaires (14), les ouvertures rectangulaires (14) étant disposées de telle sorte que leurs bords (15, 16) se situent dans la direction de transport T des poissons et à angle droit par rapport à la direction de transport T.

2. Dispositif selon la revendication 1, **caractérisé en ce que** les bords (15) des ouvertures (14) dirigés dans la direction de transport T des poissons sont plus courts que les bords (16) des ouvertures (14) qui sont orientés à angle droit par rapport à la direction de transport T.

3. Dispositif selon la revendication 1 ou 2, **caractérisé en ce que** les nervures (17) entre des ouvertures adjacentes (14) sont plus étroites que les ouvertures (14) dans leur largeur transversalement à la direction de transport T.

4. Dispositif selon l'une quelconque des revendications 1 à 3, **caractérisé en ce que** les ouvertures (14) sont disposées suivant un motif régulier dans l'élément de fond (12).

5. Dispositif selon l'une quelconque des revendications 1 à 4, **caractérisé en ce que** plusieurs ouvertures (14) sont juxtaposées dans une rangée transversalement à la direction de transport T.

6. Dispositif selon la revendication 5, **caractérisé en ce que** les ouvertures (14) d'une rangée sont situées de manière décalée par rapport aux ouvertures (14) des rangées adjacentes dans la direction de transport T.

7. Dispositif selon l'une quelconque des revendications 1 à 6, **caractérisé en ce qu'**un élément de guidage (18) pour recevoir et évacuer les composants fluides et/ou solides tombant à travers les ouvertures (14) de la tôle grillagée est disposé en dessous de la tôle grillagée.

8. Dispositif selon la revendication 7, **caractérisé en ce que** l'élément de guidage (18) forme avec les éléments de délimitation latéraux (13) un conduit en forme de U.

9. Dispositif selon la revendication 8, **caractérisé en ce que** la tôle grillagée est insérée dans le conduit en forme de U.

10. Dispositif selon l'une quelconque des revendications 7 à 9, **caractérisé en ce que** la tôle grillagée est disposée parallèlement à l'élément de guidage (18).

11. Dispositif selon l'une quelconque des revendications 8 à 10, **caractérisé en ce que** l'organe vibrant est associé au conduit en forme de U.

12. Dispositif selon l'une quelconque des revendications 7 à 11, **caractérisé en ce que** la distance entre la tôle grillagée et l'élément de guidage (18) et/ou l'angle entre la tôle grillagée et l'élément de guidage (18) peuvent être réglés.

13. Dispositif selon l'une quelconque des revendications 7 à 12, **caractérisé en ce que** la distance entre la tôle grillagée et l'élément de guidage (18) vaut entre 5 mm et 20 mm et de préférence entre 7 mm et 16 mm et de manière particulièrement préférée approximativement 10 mm.

14. Dispositif selon l'une quelconque des revendications 1 à 13, **caractérisé en ce qu'**au moins la tôle grillagée est fabriquée en acier inoxydable.

15. Installation (24) pour redresser des poissons dans la direction tête/queue, comportant un dispositif de transport de poissons (10) ainsi qu'une installation (21) disposée à une extrémité du dispositif de transport de poissons (10) pour tourner les poissons par rapport à leur position dans la direction tête/queue, **caractérisée en ce que** le dispositif de transport de poissons (10) est réalisé selon l'une quelconque des revendications 1 à 14.
